# EUROPÄISCHE PATENTSCHRIFT

(11) **EP 1 082 496 B1**
(45) Veröffentlichungstag und Bekanntmachung des Hinweises auf die Patenterteilung: **28.01.2004**
(21) Anmeldenummer: 99920450.6
(22) Anmeldetag: 12.05.1999
(51) Int. Cl.: E01F 8/00

(54) **SCHALLSCHUTZEINRICHTUNG**
SOUNDPROOFING DEVICE
DISPOSITIF ANTIBRUIT

(30) Priorität: 12.05.1998 AT 81598
(43) Veröffentlichungstag der Anmeldung: 14.03.2001
(73) Patentinhaber: Brunbauer, Wolfgang, 2531 Gaaden (AT)
(72) Erfinder: Brunbauer, Wolfgang, 2531 Gaaden (AT)
(74) Vertreter: Casati, Wilhelm, Dipl.-Ing.
(86) Internationale Anmeldenummer: PCT/AT1999/000121
(87) Internationale Veröffentlichungsnummer: WO 1999/058765

(56) Entgegenhaltungen:
- EP-A- 0 035 607
- EP-A- 0 361 025
- EP-A- 0 648 897
- EP-A- 0 798 426
- DE-C- 19 509 678
- FR-A- 1 536 973
- GB-A- 2 300 202
- GB-A- 2 310 445
- US-A- 4 358 090
- US-A- 4 425 981
- "Spoiler antirumore" NUOVA FINESTRA, Bd. 16, Nr. 4, 1. April 1995 (1995-04-01), Seite 78 XP002114273 Milano

## Beschreibung

Die Erfindung betrifft eine Schallschutzeinrichtung in Form einer Wand mit einem oberen, gegenüber dem daran nach unten anschließenden Wandabschnitt unterschiedliche Neigung aufweisenden, insbesondere gekrümmten Wandabschnitt.

Aus einem Artikel "Spoiler Antirumore" in der Veröffentlichung NUOVA FINESTRA. Bd. 16, Nr. 4, 1. April 1995, Seite 78 XP002114273, Milano, ist eine Schallschutzwand, die Aluminiumprofile aufweist, bekannt, wobei der obere Wandabschnitt (Spoiler) gegenüber den daran anschließenden unteren Wandabschnitt unterschiedliche Neigung aufweist und gekrümmt ist. Der Spoiler bewirkt dabei einen dreimal so hohen Lärmschutzeffekt im Vergleich zu einer herkömmlichen Wand. Der Spoiler endet in einer scharfen Kante.

Aufgabe der Erfindung ist es, das Schallschluckvermögen bzw. den Schallschutz überhaupt, den derartige Wände bewirken, zu verbessern. Hiezu schlägt die Erfindung vor, daß der obere, aus schallabsorbierendem Material bestehende oder damit beschichtete Wandabschnitt (Spoiler) am freien Ende als Wulst aus schallabsorbierendem Material ausgebildet oder mit einem Wulst aus solchem Material versehen ist, der frontseitig, d.h. auf der der Lärmquelle zugewandten Seite, tangential in den Wandabschnitt mündet bzw, diesen fortsetzt.

Durch die Anordnung des Wulstes wird eine Beugekante am oberen Wandabschnitt vermieden, wodurch das Schallabsorptionsvermögen der Wand verbessert wird. Der Wulst kann auch um das Ende des oberen Wandabschnittes herumgeführt sein und tangential in die Rückseite des Wandabschnittes münden, insbesondere in eine dort ebenfalls vorgesehene Schicht aus schallabsorbierendem Material. Der obere Wandabschnitt kann auch als Ebene ausgebildet sein und mit dem anschließenden (unteren) Wandabschnitt einen (von 180° abweichenden) Winkel einschließen.

Der Wulst kann an der Rückseite des Wandabschnittes auf diesen auftreffen und an der Auftreffstelle mit der Tangente an die Rückseite der Wand an der Auftreffstelle einen Winkel einschließen.

In weiterer Ausgestaltung der Erfindung kann vorgesehen sein, daß der obere Wandabschnitt (Spoiler) als gesonderter Bauteil ausgebildet und hinsichtlich seiner Neigung gegenüber dem benachbarten Verkehrsweg justierbar sein. Die Ausbildung des Spoilers als gesonderter Bauteil ist vor allem für Nachrüstungszwecke günstig. Der als gesonderter Bauteil ausgebildete obere Wandabschnitt kann schwenkbar mit der Wand verbunden sein. Die Anordnung der Schallschutzeinrichtung kann hiebei so erfolgen, daß der obere Wandabschnitt insbesondere tangential zu einer Linie ist, die von der der Schallschutzeinrichtung zunächst gelegenen Lärmquelle auf dem Verkehrsweg ausgeht. Bei dieser Ausgestaltung ist es möglich, den den Spoiler bildenden Wandabschnitt nachträglich an eine Wand anzusetzen und an ihr festzulegen. Ist der Spoiler schwenkbar mit der Wand verbunden, so kann die Neigung des Spoilers gegenüber dem benachbarten Verkehrsweg justiert werden, um sicherzustellen, daß von den Lärmquellen im Verkehrsweg ausgehende Linien den Spoiler tangieren. Dies betrifft insbesondere die von der Wand am weitesten entfernten und die der Wand am nächsten gelegenen Lärmquellen.

Erfindungsgemäß ist es auch möglich, den oberen Wandabschnitt als ebene Fläche, z.B. in Teilbereichen des Querschnittes auszubilden. Bekannt wurde ein ebenflächiger, am oberen Ende einer vertikalen Schallschutzwand schwenkbar angebrachter Wandabschnitt (DE 38 09 063 A1). Dieser Wandabschnitt kann aus einer Wirkstellung, in der er gegen die vertikale Schallschutzwand in abgewinkelter Stellung verriegelt ist, nach Entriegelung hochgeschwenkt werden, um Reparaturarbeiten von der vom Verkehrsweg abliegenden Seite aus durchführen zu können.

In einer weiteren Ausgestaltung der Schallschutzeinrichtung kann erfindungsgemäß vorgesehen werden, daß die Wand aus gelenkig miteinander verhakten, insbes. aus stranggepreßtem Aluminium bestehenden Profilstreifen gebildet ist. Diese Ausgestaltung erlaubt eine freizügige Gestaltung, ausgerichtet auf ein optimales Schallschluckvermögen.

In Weiterbildung der Erfindung kann auch vorgesehen werden, daß die Wand aus mehreren Kassetten zusammengesetzt ist, deren jede jeweils einen Boden- und einen perforierten, z.B. aus Streckmetall bestehenden, Deckelteil besitzen, die eine Lage aus schallabsorbierendem Material umschließen, die am bevorzugt schweren Bodenteil aus beispielsweise spezifisch schwerem Material, z.B. Blech oder Nirosta, aufliegt und daß Bodenteil und Deckelteil nach Art einer Schachtel zusammengesetzt sind und die Lage aus schallabsorbierendem Material Bestandteil eines Sandwichkörpers ist, der z.B. aus Steinwolle besteht und gegebenenfalls mit dem Boden verklebt ist und deckelseitig mit einer gegebenenfalls aufgeklebten Noppenfolie abgedeckt ist, die den perforierten Deckelteil berührt, mit dem sie bevorzugt verklebt ist. Der Lochanteil im Deckelteil kann 45 % der Deckelfläche beträgen. Der der Schallquelle zuzuwendende Deckelteil der Kassette kann aus Streckmetall bestehen. Bei der Kassetten-Bauweise ist jedoch die Verwendung von Lochblechen vorgesehen, da diese bei der Verklebung mit der Lochblechen vorgesehen, da diese bei der Verklebung mit der benachbarten Noppenfolie günstiger wirken. Die Kassetten können auch gekrümmt ausgeführt sein. Die Noppenfolie wirkt sich günstig auf das Schallschluckvermögen aus. Ist die Noppenfolie sowohl mit dem Deckelteil als auch mit der Lage aus schallabsorbierendem Material verklebt und diese wiederum mit dem Boden verklebt, so entsteht eine stark belastbare Kassette, da deren Widerstandsmoment durch die Verklebung der Schichten untereinander und mit dem Deckel- bzw. Bodenteil erhöht wird. Sind Boden- und Deckelteil nach Art einer Schachtel zusammengesetzt, so steht die gesamte Tiefe der Kassette zur Unterbringung von schalldämmendem Material zur Verfügung, unterschiedlich zu einer Ausführungsform, bei der der Deckelteil in die Kassette eingesetzt ist und je nach Tiefe des Einsetzens ein Teil der Gesamttiefe der Kassette für die Unterbringung schalldämmenden Materials verlorengeht.

Durch die DE-AS 26 18 836 wurde es bei einer Schallschutzeinrichtung bekannt, die Wand aus mehreren Kassetten zusammenzusetzen, deren jede jeweils einen Boden- und einen aus Streckmetall bestehenden Deckelteil besitzt, die eine Lage aus schallabsorbierendem Material umschließen, die am schweren Bodenteil aus spezifisch schwerem Material, z.B. Blech, aufliegt. Der Deckelteil ist hiebei in die Kassette eingesetzt und vermindert den für die Unterbringung des schallabsorbierenden Materials zur Verfügung stehenden Raum. Zwischen der in die Kassette eingebrachten Dämmstoffmatte und dem eingesetzten Deckelteil ist ein Hohlraum freigehalten. Für die Dämmstoffmatte bedarf es hiebei einer besonderen Halterungskonstruktion mit am Boden, der aus Wellblech besteht, angepunkteten Zungen, die um den Rand der Dämmstoffmatte gebogen werden müssen, wobei zusätzlich Vorkehrungen zu treffen sind, um die Hülle der Dämmstoffmatte nicht zu beschädigen.

Aus Umweltsgründen ist es zweckmäßig, wenn in Weiterbildung der Erfindung das schallabsorbierende Material recyclebar ist. Bevorzugt können als schallabsorbierendes Material zerfasertes Papier von Tageszeitungen oder Flachsfasern verwendet werden. Zur Imprägnierung gegen Witterungseinflüsse kann das Papier oder die Flachsfasern beispielsweise mit Borsalzen imprägniert werden. Die Verwendung von Recycling-Elastomeren als Auflage auf Plattenelementen und zur Herstellung der Platten in Lärmschutzwänden ist aus der DE- 42 20 547 A 1 bekanntgeworden.

Für die Schalldämmung entlang von Verkehrswegen, eingeschlossen auch jene des schienengebundenen Verkehrs, erweist sich eine Anordnung einer Schallschutzeinrichtung der zuvor beschriebenen Art als zweckmäßig, bei der der Krümmungsmittelpunkt bzw. die Krümmungsmittelpunkte des oberen Wandabschnittes (Spoiler) an der von der Lärmquelle abgewandten Seite der Wand liegen. Der Krümmungsradius sollte möglichst groß sein und kann gegebenenfalls auch unendlich sein. Je weiter sich dabei der obere Wandabschnitt von der Lärmquelle weg erstreckt, umso günstiger ist die Wirkung. Die Anordnung des oberen Wandabschnittes (Spoilers) sollte so erfolgen, daß sowohl von einer von der Wand am weitesten entfernten, auf dem Verkehrsweg befindlichen Lärmquelle als auch von einer der Wand am nächsten befindlichen, auf dem Verkehrsweg befindlichen Lärmquelle an den oberen Wandteil (Spoiler), diesen tangierende Linien legbar sind.

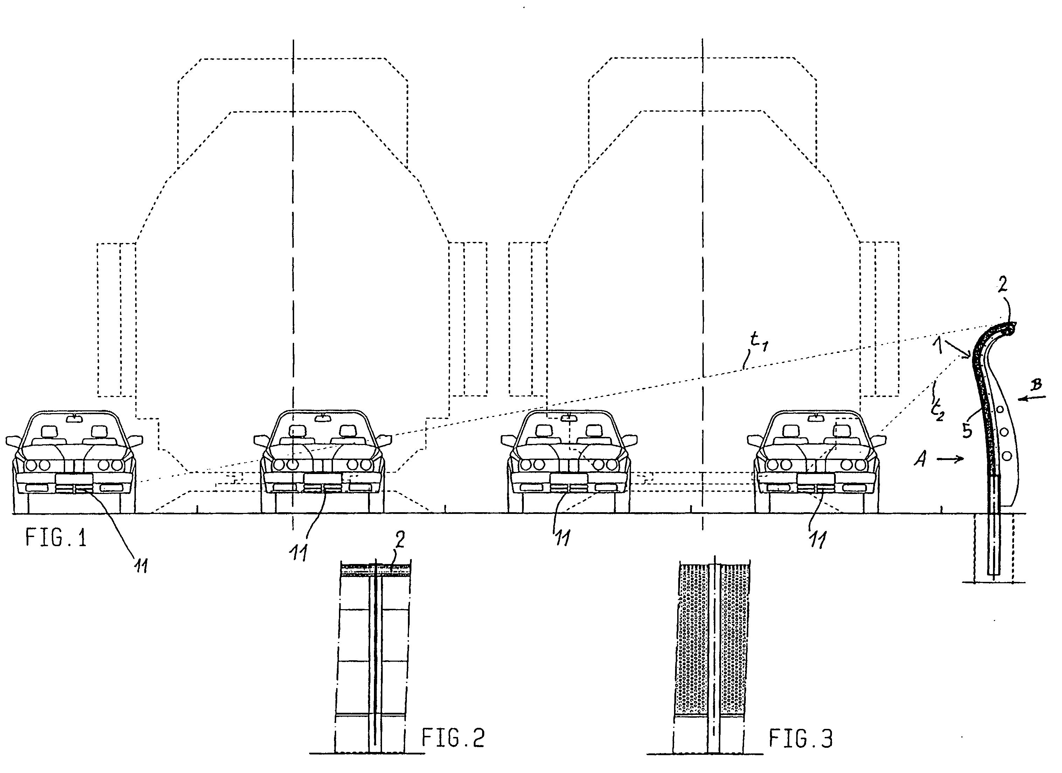

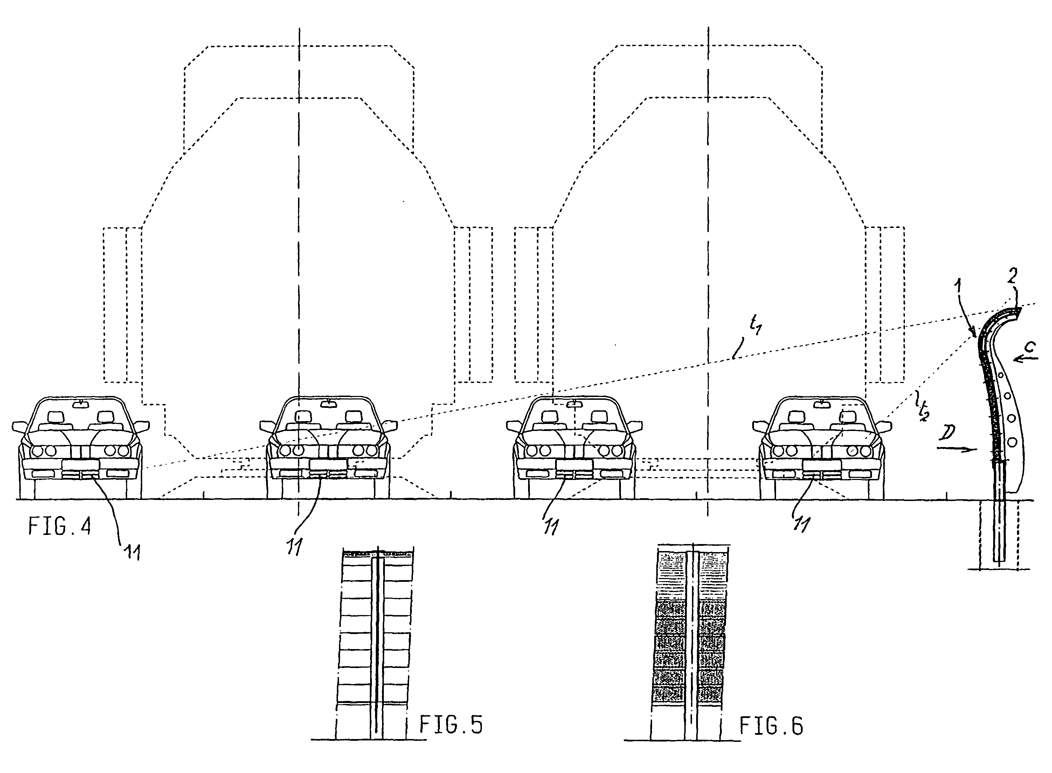

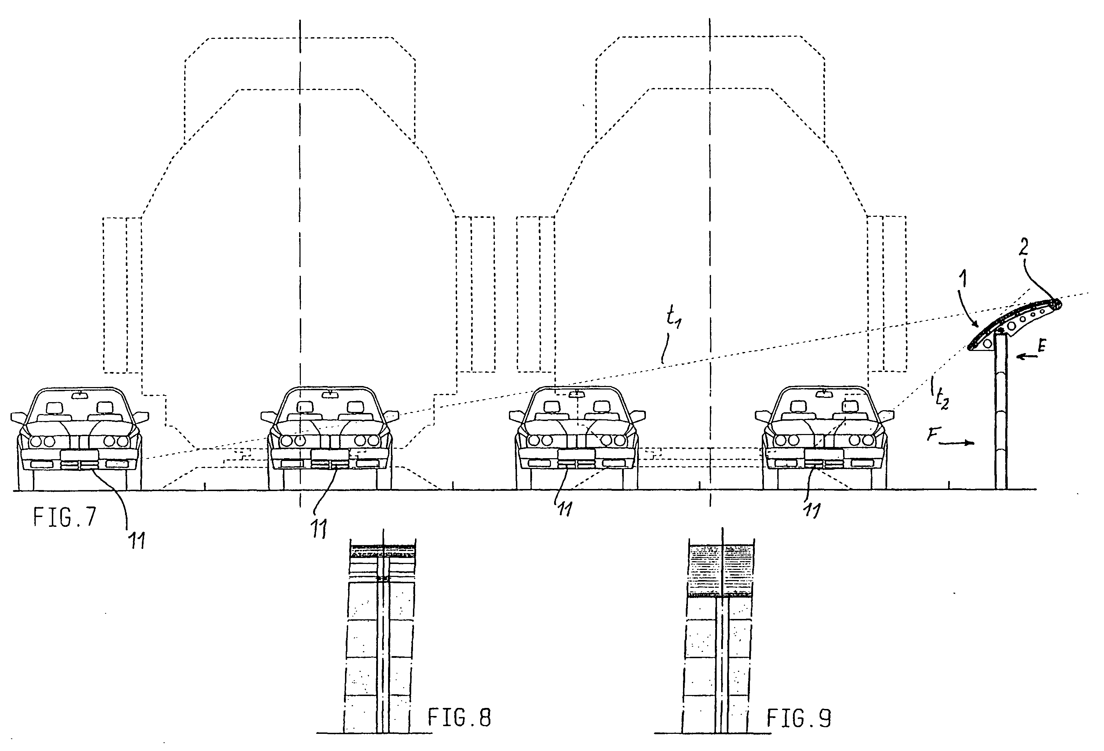

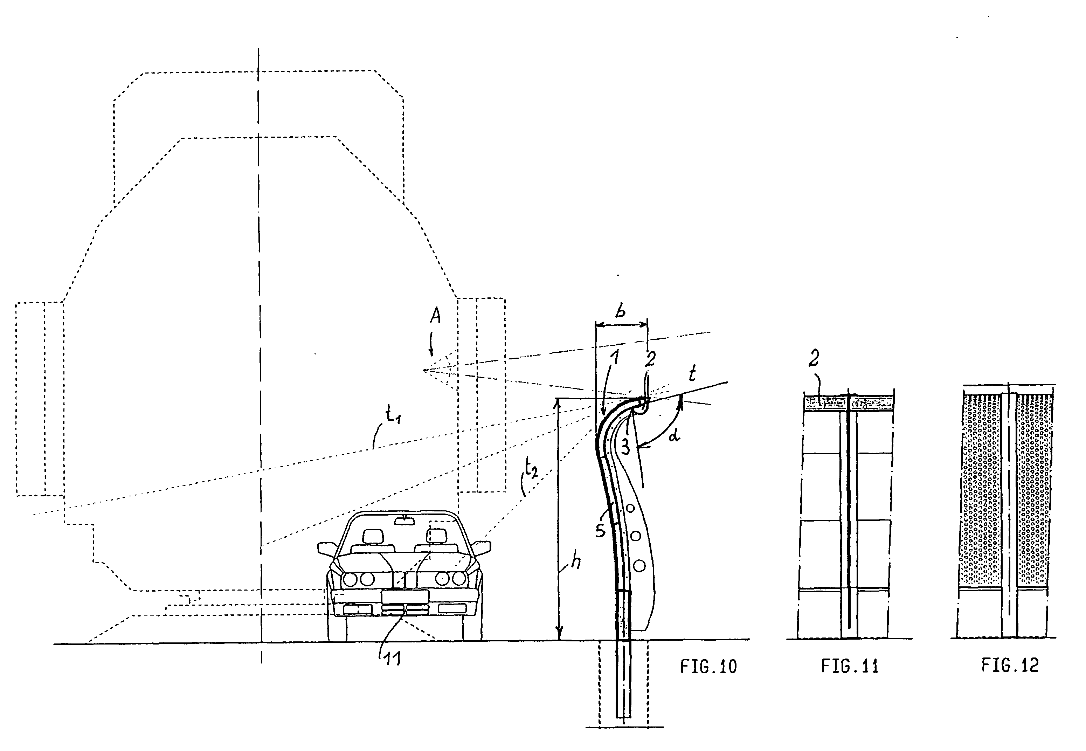

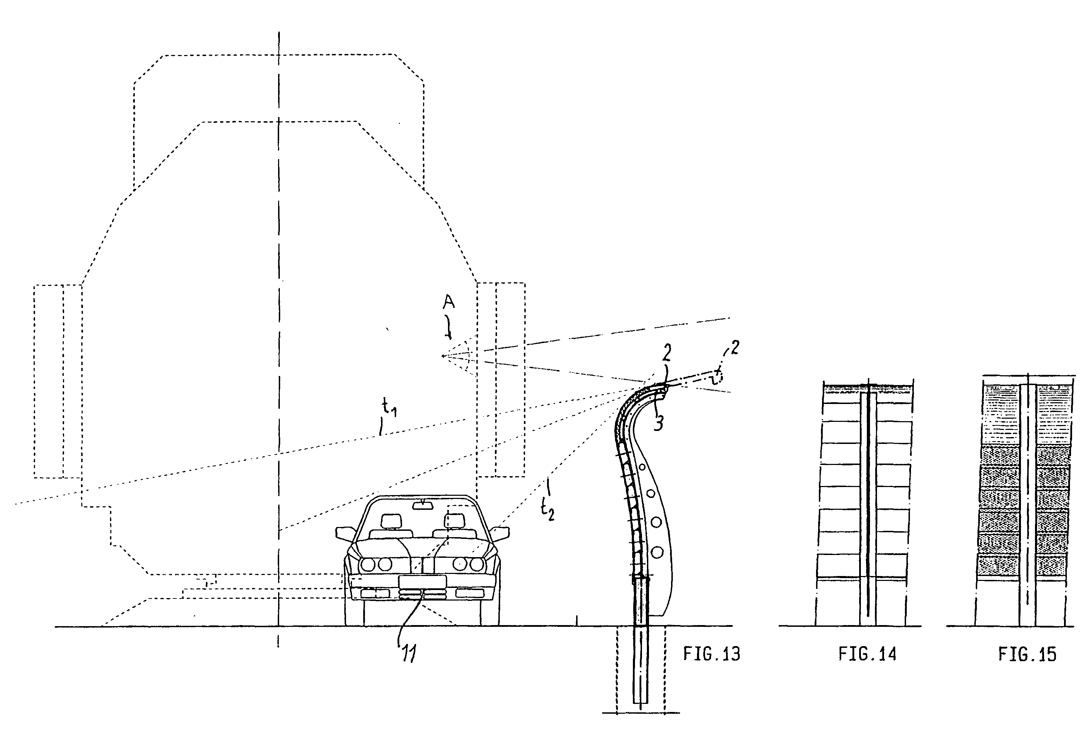

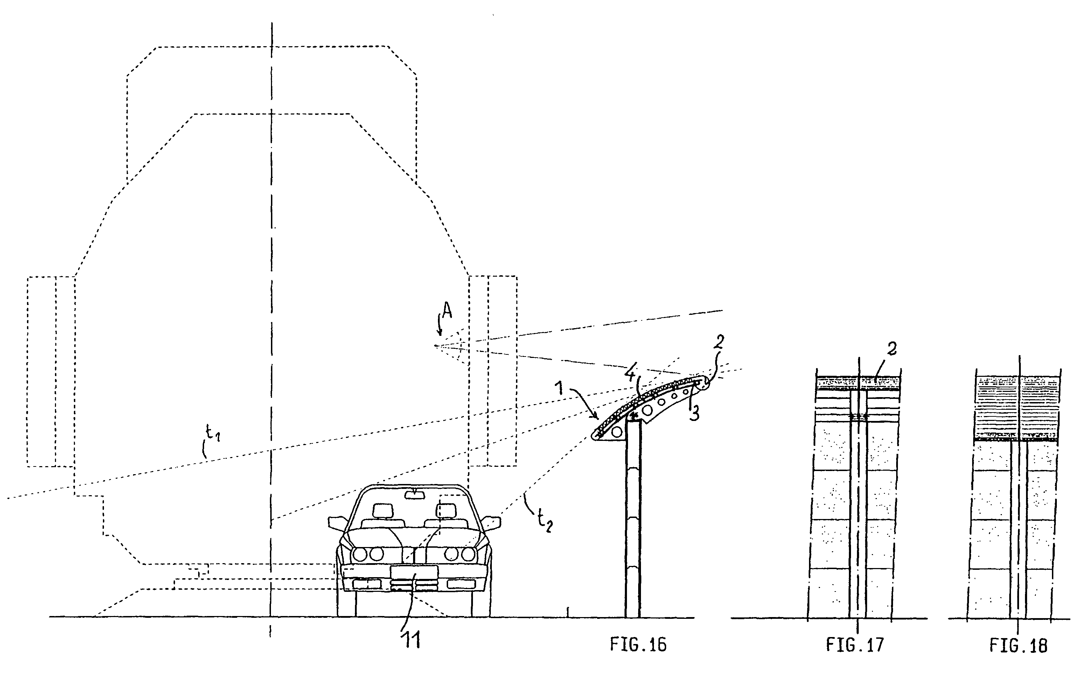

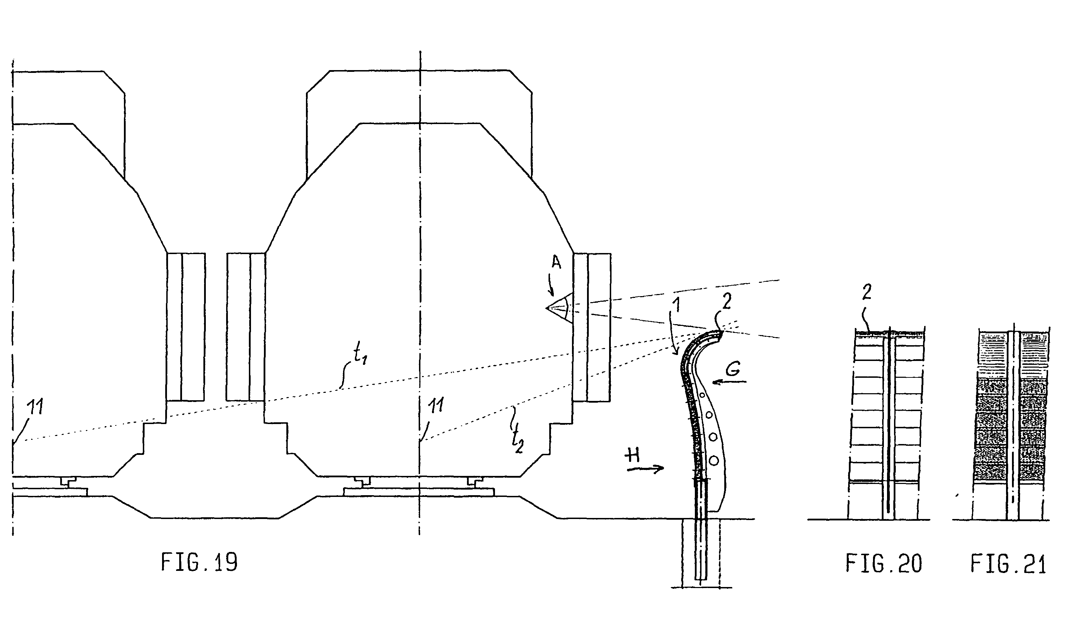

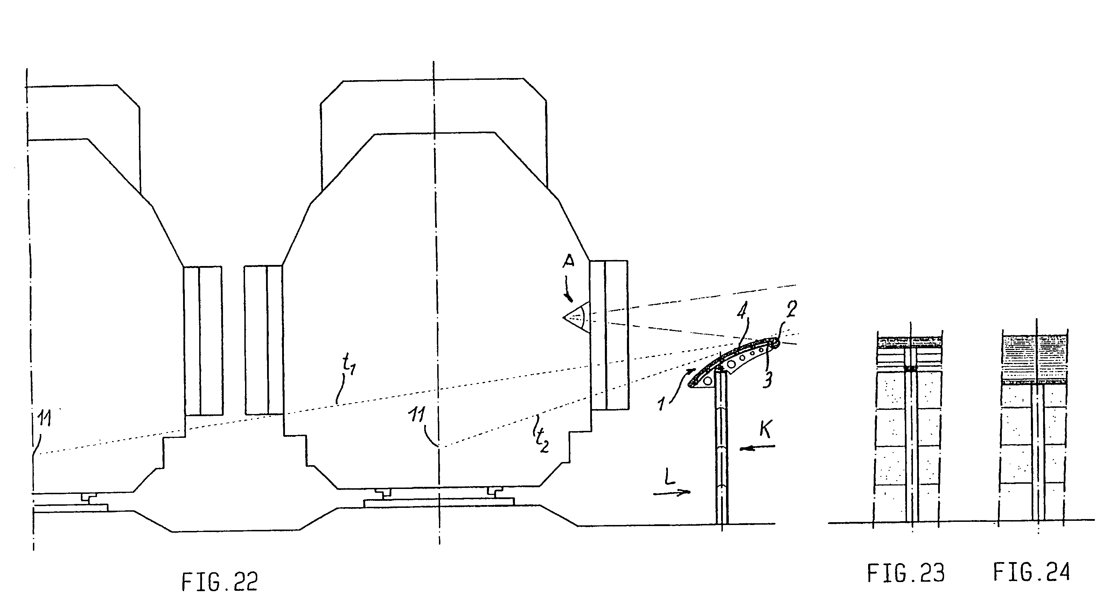

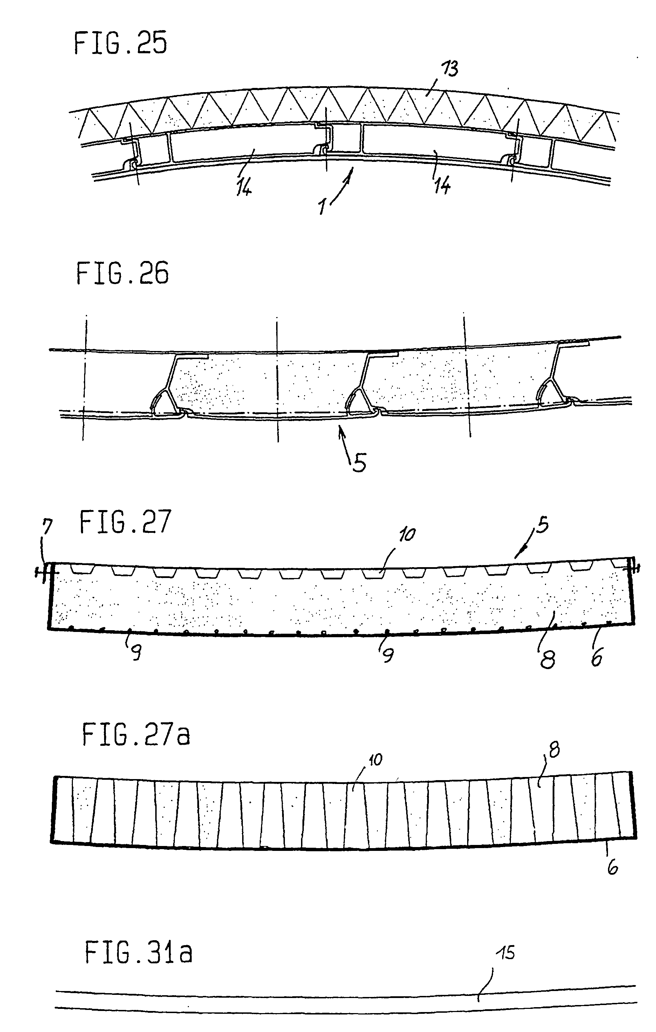

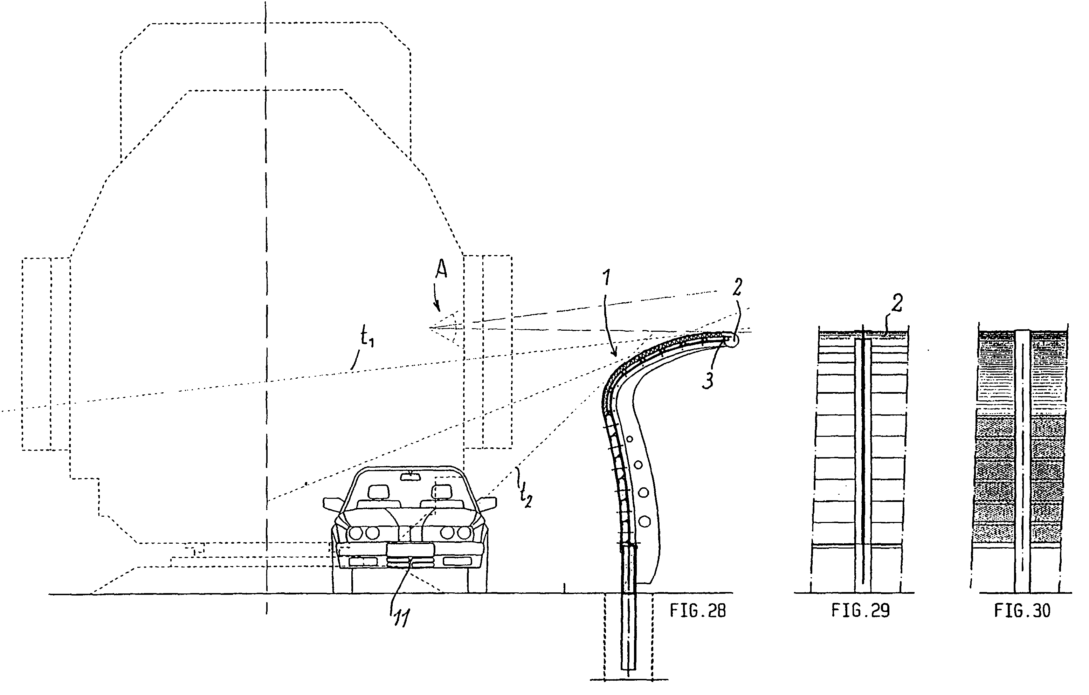

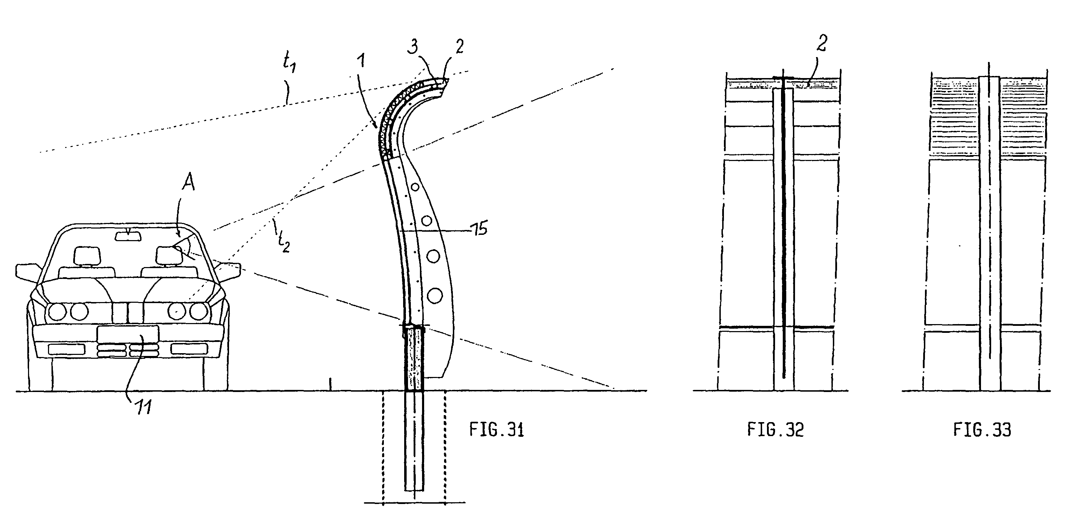

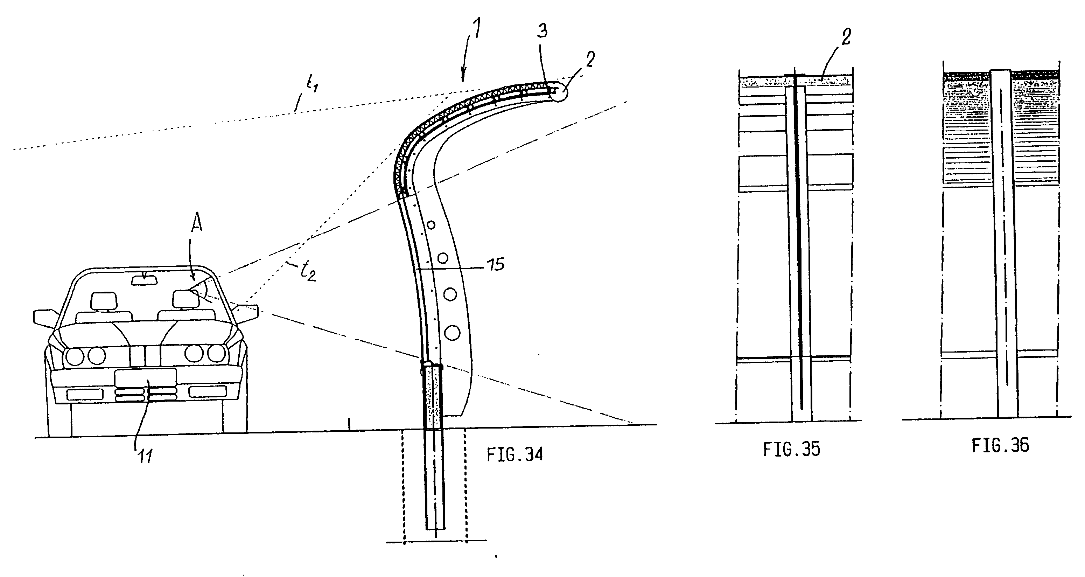

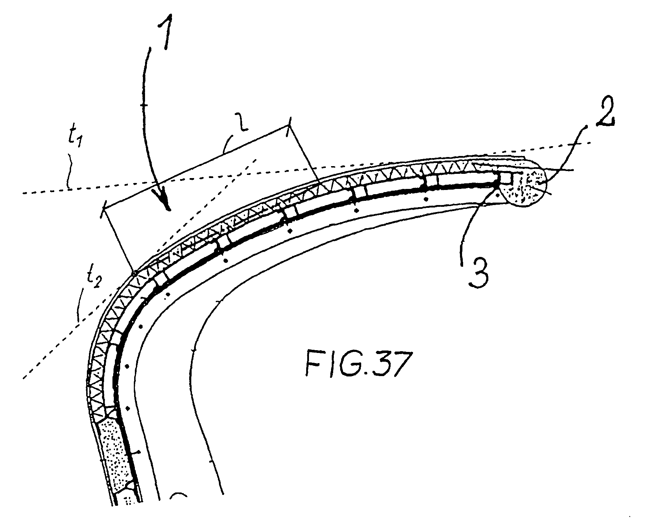

Die Erfindung wird nachstehend anhand der Zeichnungen näher erläutert. Es zeigen: Fig. 1 eine erste Anordnung einer Lärmschutzwand mit einem erfindungsgemäß ausgebildeten oberen Wandabschnitt an einem vierbahnigen Verkehrsweg, Fig. 2 eine Ansicht in Richtung des Pfeiles B in Fig. 1 und Fig. 3 eine Ansicht in Richtung des Pfeiles A in Fig. 1, Fig. 4 eine gegenüber Fig. 1 modifizierte Lärmschutzwand, ebenfalls mit einem erfindungsgemäß ausgebildeten oberen Wandabschnitt (Spoiler) an einem vierbahnigen Verkehrsweg, Fig. 5 eine Ansicht der Wand in Richtung des Pfeiles C in Fig. 4, und Fig. 6 eine Ansicht in Richtung des Pfeiles D in Fig. 4, Fig. 7 eine weitere Ausgestaltung des erfindungsgemäßen oberen Wandabschnittes, der schwenkbar mit der Lärmschutzwand verbunden ist, wieder neben einem vierbahnigen Verkehrsweg, Fig. 8 eine Ansicht in Richtung des Pfeiles E in Fig. 7, und Fig. 9 eine Ansicht in Richtung des Pfeiles F in Fig. 7, Fig. 10 die Lärmschutzwand aus Fig. 1 in einem gegenüber Fig. 1 größeren Maßstab, die Fig. 11 und 12 zwei Seitenansichten, zugeordnet der Fig. 10, Fig. 11 dabei von rechts gesehen und Fig. 12 von links gesehen, Fig. 13 eine vergrößerte Ansicht der in Fig. 4 dargestellten Lärmschutzwand, die Fig. 14 und 15 Seitenansichten der in Fig. 13 dargestellten Wand, wobei Fig. 14 eine Ansicht von rechts und Fig. 15 eine Ansicht von links ist, Fig. 16 die in Fig. 7 gezeigte Wand in größerem Maßstab, die Fig. 17 und 18 Seitenansichten zu Fig. 16, wobei Fig. 17 eine Seitenansicht von rechts und Fig. 18 eine Seitenansicht von links ist, Fig. 19 die Anordnung einer erfindungsgemäßen Schallschutzeinrichtung neben einer zweigleisigen Eisenbahntrasse, die Fig. 20 und 21 Seitenansichten der in Fig. 19 dargestellten Lärmschutzwand, Fig. 20 in Richtung des Pfeiles G und Fig. 21 in Richtung des Pfeiles H, Fig. 22 die Anordnung eines schwenkbaren oberen Wandabschnittes neben einer zweigleisigen Eisenbahntrasse, wobei die Fig. 23 und 24 hiebei Seitenansichten in Richtung des Pfeiles K bzw. L veranschaulichen, Fig. 25 einen Teilschnitt durch einen Spoiler, Fig. 26 einen Teilschnitt durch die an den Spoiler anschließende Wand, die Fig. 27 und 27a Kassettenausbildungen im Schnitt, die Fig. 28 bis 30 eine gegenüber den Fig. 13 bis 15 abgeänderte Ausführung einer Schallschutzwand mit gegenüber Fig. 13 verlängertem (gekrümmten) oberen Wandabschnitt, Fig. 29 ist eine Ansicht der Fig. 28 von rechts, und Fig. 30 von links, die Fig. 31 bis 33 zeigen eine Lärmschutzwand mit einem erfindungsgemäß ausgebildetem oberen Abschnitt und einem unteren Wandabschnitt, der durchsichtig oder zumindest durchscheinend ist, wobei Fig.31 die Lärmschutzwand in einem Querschnitt und die Fig. 32 bzw. 33 in einer Ansicht von der der Lärmquelle abgewandten bzw. der der Lärmquelle zugewandten Seite zeigen, Fig. 31a zeigt ein Detail aus Fig 31, nämlich den unteren Wandabschnitt, die Fig. 34 bis 36 zeigen eine Lärmschutzwand in einer den Fig. 31 bis 33 entsprechenden Darstellung, jedoch mit gegenüber der Ausführung der Fig. 31 bis 33 verlängertem oberen Wandabschnitt und Fig. 37 einen Teilschnitt durch den oberen Wandabschnitt einer erfindungsgemäßen Lärmschutzwand.

In der Zeichnung ist mit 1 ein oberer, in der Zeichnung gekrümmt dargestellter Abschnitt der Wand bezeichnet, welche eine Schallschutzeinrichtung bildet. Der obere Wandabschnitt kann jedoch auch eben ausgebildet sein, in welchem Fall er unterschiedliche Neigung gegenüber dem nach unten anschließenden Wandabschnitt aufweist. Das freie Ende des oberen, aus schallabsorbierendem Material 13 hergestellten oder mit einem solchen Material 13 beschichteten Wandabschnittes 1 (Fig. 25), der eine Art Spoiler bildet, ist als Wulst 2 aus ebenfalls schallabsorbierendem Material ausgebildet bzw. mit einem solchen Material versehen. Der Wulst 2 mündet frontseitig tangential in den Wandabschnitt ein bzw. setzt den Endabschnitt tangential fort. An der Rückseite des Wandabschnittes 1, der auch aus schallabsorbierendem Material bestehen kann oder mit einem solchen Material beschichtet ist, trifft der Wulst 2 bevorzugt unter einem Winkel α mit der Tangente an der Rückseite des Wandabschnittes an der Anschlußstelle 3 auf. Bei der Ausführungsform gemäß Fig. 25 liegt das schallabsorbierende Material auf miteinander verhakten, prismatischen Hohlprofilen 14 auf.

Der Wulst 2 kann das Ende des oberen Wandabschnittes 1 auch umschließen und sowohl frontseitig als auch rückseitig tangential in den Wandabschnitt 1 übergehen.

Der obere Wandabschnitt 1 kann zum Zwecke der Nachrüstung bereits bestehender Wände von Schallschutzeinrichtungen als gesonderter Bauteil 4 ausgebildet sein. Dieser Bauteil 4 ist dann mit der Wand zu verbinden, bevorzugt wird diese Verbindung schwenkbar gestaltet, wie dies die Fig. 16 und 22 mehr im Detail zeigen. Die durch eine Schallschluckwand erzielbare Schalldämmung, d. i. die Differenz der Dezibelwerte am Ort der Schallquelle und am Ort eines auf der von der Schallquelle abgewandten Seite der Schallwand befindlichen Hörers, ist von der Summe der Höhe h und der Breite b (Fig. 10) abhängig, d.h. die Schalldämmung wird bei gleichbleibender Höhe h umso besser, je größer die Breite der Schallschutzwand ist, d.h. je weiter sich die Wand etwa in einer im wesentlichen Horizontalen bzw. gegenüber der Horizontalen geringfügig nach oben geneigten Richtung weg erstreckt.

In Fig. 13 ist mit strichpunktierten Linien oben eine Verlängerung des im Wulst 2 endigenden, oberen Wandabschnittes 1 in strichpunktierten Linien eingetragen. Eine solche Verlängerung bringt aus den vorstehend dargelegten Gründen eine Verbesserung der Schalldämmung, verglichen zu der in vollen Linien eingetragenen Anordnung des oberen gekrümmten Wandabschnittes. Fig. 28 zeigt eine weitere, gegenüber den anderen Ausführungsbeispielen (etwa Fig. 13) verlängerte Ausführung des oberen Wandabschnittes 1, wobei die Summe h + b größer ist als bei der Ausführung gemäß Fig. 13 oder Fig. 10.

Die Wand kann als Kassette ausgebildet sein, jedoch kann sie auch aus mehreren Kassetten 5 zusammengesetzt werden, die dann untereinander verbunden sind. Fig. 26 zeigt dabei eine Verbindung durch Verhaken benachbarter Kassetten, die mit schallabsorbierendem Material gefüllt sind. Die Kassetten 5 weisen, wie dies aus Fig. 27 für eine gegenüber Fig. 26 abgeänderte Ausführung ersichtlich ist, einen Bodenteil 6 und einen Deckelteil 7 auf. Bodenteil und Deckelteil 7 sind nach Art einer Schachtel zusammengesetzt, wobei Boden- und Deckelteil an den einander überlappenden Seitenrändern bevorzugt durch Nieten miteinander verbunden sind. Eine Klebung zur Verbindung von Bodenteil 6 und Deckelteil 7 ist ebenfalls möglich. Die Kassette umschließt einen Sandwichkörper. Der Sandwichkörper besteht aus einer Lage 8 aus schallabsorbierendem Material, etwa aus Mineral-, insbes. Steinwolle. Das schallabsorbierende Material wird am Bodenteil 6 durch Verkleben befestigt. Der Bodenteil 6 wird aus Gründen des Schwingungsverhaltens bei Beschallung, schwer ausgeführt. Er kann beispielsweise aus spezifisch schwerem Material, z.B. Stahlblech oder Nirosta, bestehen. Eine Ausführung aus Aluminium bei entsprechender Wandstärke ist ebenfalls möglich. Deckelseitig ist das schallabsorbierende Material mit einer Noppenfolie 10 abgedeckt. Diese besitzt sowohl statische als auch wasserabweisende Funktion und kann mit der Lage 8 aus schallabsorbierendem Material ebenfalls verklebt sein. Die Noppenfolie 10 liegt in der Kassette 5 vor dem Deckelteil 7, der aus einem Material besteht, das spezifisch leichter als das Material des Bodenteiles 6 ist. Der Deckelteil 7 weist Perforationen auf, wobei der Lochanteil vorzugsweise 45 % der Fläche des Deckelteiles 7 ausmacht. Mit dem Deckelteil 7 kann die Noppenfolie 10 ebenfalls verklebt sein. Sind die Noppenfolie 10 und die Lage 8 aus schallabsorbierendem Material untereinander, die Noppenfolie 10 mit dem Dekkelteil 7 und die Lage 8 aus schallabsorbierendem Material mit dem Bodenteil 6 verklebt, so wird dadurch die Biegefestigkeit der Kassette 5 als Ganzes erhöht, weil deren Widerstandsmoment erhöht wird. Das schallabsorbierende Material kann recyclebar sein, wodurch die Umweltbelastung vermindert wird. Bevorzugt wird als Material dabei zerfasertes Zeitungspapier oder Fasern aus Flachs verwendet, das auch gegen Witterungseinflüsse imprägniert sein kann, beispielsweise mittels Borsalzen. Der Deckelteil 7 der Kassette 5 kann aus Streckmaterial hergestellt sein. Günstiger ist es jedoch, den Deckelteil 7 aus gelochtem Blech herzustellen, da dies für die Verklebung mit der Noppenfolie 10 günstig ist.

Die Kassetten 5 können auch, wie dies etwa Fig. 27 zeigt, gekrümmt ausgebildet sein. Die Wand kann auch aus Strangpreßprofilen, insbesondere aus Aluminium, hergestellt werden, wobei die Profile in Form länglicher Leisten in Längsrichtung ineinander verhakt sind und durch Vernietung zu einer homogenen Schale verbunden werden können. Auf diese Weise entsteht eine biegesteife Wand. Diese Wand kann dann zwischen Säulen angeordnet sein, die in einem gegenseitigen Abstand von etwa 5 m neben einem Verkehrsweg, der mit einer Schallschutzeinrichtung versehen werden soll, angeordnet sind. Die Aluminiumprofile können Kammern bilden, in welche Steinwolle, die schallabsorbierend wirkt, eingeklemmt wird (Fig. 26). Die Formteile aus Steinwolle, die in die Kammern der Strangpreßprofile eingeklebt werden, können durch eine Schutzfolie und ein Metallgitter (Fig. 12) schallseitig geschützt werden. Der obere Wandabschnitt (der Spoiler) kann aus stranggepreßten Aluminium-Kastenprofilen 14 bestehen, die durch entsprechendes Zusammenfügen, die Oberfläche des Spoilers bilden (Fig. 25). Auf die (in Fig. 25 gekrümmte) Fläche kann eine Matte 13 aus schallabsorbierendem Material aufgeklebt werden. Am freien Rand des Spoilers befindet sich der Wulst 2 aus weichem Material (Fig. 10).

Die in Fig. 27a dargestellte Ausführungsform entspricht im wesentlichen der in Fig. 27 dargestellten Ausführungsform mit dem Unterschied, daß gemäß Fig. 27a die Noppenfolie 10 mit den Noppen bis zus Boden 6 reicht. Der Zwischenraum zwischen den Noppen ist mit schallabsorbierendem Material 8 gefüllt, z.B. mit einem solchen Material ausgeschäumt bzw. ausgestopft.

Die Schallschutzeinrichtung wird zwecks Lärmdämmung entlang von Verkehrswegen angeordnet, u.zw. derart, daß der Krümmungsmittelpunkt - im Falle der gekrümmte Wandabschnitt auch Teile verschiedener Krümmungen aufweist, die Krümmungsmittelpunkte - an der von der Lärmquelle 11 abgewandten Seite der Wand liegen. Die Anordnung des oberen Wandabschnittes 1 (Spoilers) erfolgt dabei in solcher Weise, daß - wie dies aus den Fig. 1, 4 und 7 ersichtlich ist - sowohl von einer von der Wand am weitesten entfernten, auf dem Verkehrsweg befindlichen Lärmquelle 11 als auch auf einer der Wand am nächsten befindlichen Lärmquelle 11 auf dem Verkehrsweg, an den oberen Wandteil 1, diesen tangierend, Linien t₁, t₂ legbar sind. Dies kann dann besonders leicht erreicht werden, wenn der obere Wandabschnitt 1 schwenkbar mit der übrigen Wand verbunden ist, wie dies etwa die Fig. 7 und 16 zeigen. Durch die absorbierende Wirkung des tangential zu den Lärmquellen angeordneten oberen Wandabschnittes 1 wird das Brechnungsverhalten der Schallwellen an der Beugekante verändert. Hiedurch ergibt sich eine bessere Schalldämmung für die Umgebung, die an der von den Lärmquellen 11 abgewandten Seite liegt. Der Krümmungsradius des oberen Wandabschnittes 1 sollte möglichst groß sein, kann auch unendlich sein, in welchem Fall der Wandabschnitt 1 oder der betreffende Abschnitt eben ausgebildet ist.

Nach dem Justieren des schwenkbaren oberen Wandabschnittes 1 derart, daß die Linien t₁ und t₂, Tangenten an den Wandabschnitt bilden, wird der Wandabschnitt 1 gegenüber dem Wandteil, an dem er befestigt ist, fixiert. Zwischen der Hinterseite des schwenkbaren oberen Wandabschnittes 1 und dem Wandstück, an dem er befestigt ist, kann ein Paßstück 12, in Form eines federnd gebogenen, gekröpften Bleichstreifens mit gleitfähigem Dichtbelag angeordnet sein, der auf der bereits vorhandenen Wand, die mit dem schwenkbaren oberen Wandabschnitt 1 ausgerüstet wurde, befestigt wird. Die Höhe der Lärmschutzwand kann insbesondere an Verkehrswegen des schienengebundenen Verkehrs 50 cm betragen, womit auch für den das Verkehrsmittel Benutzenden eine günstige Optik erzielt werden kann. Fundamente für die Schallschutzeinrichtung können dabei gegebenenfalls entfallen. Auch auf "normalen" Straßen, z.B. Autobahnen, können derart niedere Schallschutzeinrichtungen eingesetzt werden.

In den Zeichnungen bezeichnet A das Auge eines das Verkehrsmittel, z. B. Eisenbahnwaggon oder PKW benutzenden Verkehrsteilnehmers. Es ist dabei aus den zeichnerischen Darstellungen ersichtlich, daß die erfindungsgemäße Schallschutzwand den Ausblick aus dem Verkehrsmittel auf die Umgebung nicht beeinträchtigt. Im Falle des schienengebundenen Verkehrs besitzt die Lärmschutzwand eine geringe Höhe, die in das Gesichtsfeld nicht hineinreicht (z. B. Fig. 10, 13, 14, 19, 22, 28) oder es besteht der untere Wandabschnitt aus einem durchsichtigen oder zumindest durchscheinendem Material (z. B. aus Acrylglas). Eine solche Scheibe ist in der Zeichnung mit 15 bezeichnet.

Aus Fig. 37 ist ersichtlich, daß der obere Wandabschnitt eine bestimmte Mindestlänge aufweisen soll, die sich nach der geringsten Frequenz der von der zu dämpfenden Schallquelle 11 ausgehenden (emittierten) Wellen richtet. Für 500 Hz beträgt die Länge 1 ca. 63 cm bei 1000 Hz nur mehr ca. 33 cm.

## Patentansprüche

1. Schallschutzeinrichtung in Form einer Wand mit einem oberen, gegenüber dem daran nach unten anschließenden Wandabschnitt unterschiedliche Neigung aufweisenden, insbesondere gekrümmten Wandabschnitt (1), **dadurch gekennzeichnet, daß** der obere, aus schallabsorbierendem Material bestehende oder damit beschichtete Wandabschnitt (1) am freien Ende als Wulst (2) aus schallabsorbierendem Material ausgebildet oder mit einem Wulst (2) aus solchem Material versehen ist, der frontseitig, d. h. auf der der Lärmquelle zugewandten Seite, tangential in den Wandabschnitt (1) mündet bzw. diesen fortsetzt.

2. Schallschutzeinrichtung nach Anspruch 1, **dadurch gekennzeichnet, daß** der Wulst (2) an der Rückseite des Wandabschnittes (1) auf diesen auftrifft und an der Auftreffstelle, mit der Tangente (t) an die Rückseite der Wand an der Auftreffstelle einen Winkel (α) einschließt.

3. Schallschutzeinrichtung nach Anspruch 1 oder 2, **dadurch gekennzeichnet, daß** der obere Wandabschnitt (1) als gesonderter Bauteil (4) ausgebildet und hinsichtlich seiner Neigung gegenüber dem benachbarten Verkehrsweg justierbar ist.

4. Schallschutzeinrichtung nach Anspruch 3, **dadurch gekennzeichnet, daß** der als gesonderter Bauteil (4) ausgebildete obere Wandabschnitt (1) schwenkbar mit der Wand verbunden ist.

5. Schallschutzeinrichtung nach einem der Ansprüche 1 - 4, **dadurch gekennzeichnet, daß** der obere Wandabschnitt (1) als ebene Fläche ausgebildet ist.

6. Schallschutzeinrichtung nach einem der Ansprüche 1 - 4, **dadurch gekennzeichnet, daß** der obere Wandabschnitt (1) in Teilbereichen des Querschnittes als ebene Fläche ausgebildet ist.

7. Schallschutzeinrichtung nach einem der Ansprüche 1 - 6, **dadurch gekennzeichnet, daß** die Wand aus gelenkig miteinander verhakten Profilstreifen gebildet ist.

8. Schallschutzeinrichtung nach Anspruch 7, **dadurch gekennzeichnet, daß** die miteinander verhakten Profilstreifen aus stranggepreßtem Aluminium bestehen.

9. Schallschutzeinrichtung nach einem der Ansprüche 1 bis 8, **dadurch gekennzeichnet, daß** die Wand aus mehreren Kassetten (5) zusammengesetzt ist, deren jede jeweils einen Boden- (6) und einen perforierten Deckelteil (7) besitzt, die eine Lage aus schallabsorbierendem Material (8) umschließen, die am Bodenteil (6) aufliegt, wobei Bodenteil (6) und Deckelteil (7) nach Art einer Schachtel zusammengesetzt sind und die Lage aus schallabsorbierendem Material Bestandteil eines Sandwichkörpers ist, der deckelseitig mit einer Noppenfolie (10) abgedeckt ist, die den perforierten Deckelteil (7) berührt (Fig. 27).

10. Schallschutzeinrichtung nach Anspruch 9, **dadurch gekennzeichnet, daß** der Deckelteil (7) aus Streckmetall besteht (Fig. 27).

11. Schallschutzeinrichtung nach Anspruch 9 oder 10, **dadurch gekennzeichnet, daß** der Bodenteil (6) schwer ist, beispielsweise aus spezifisch schwerem Material besteht (Fig. 27).

12. Schallschutzeinrichtung nach Anspruch 11, **dadurch gekennzeichnet, daß** das spezifisch schwere Material, aus dem der Bodenteil (6) besteht, Blech oder Nirosta ist (Fig. 27).

13. Schallschutzeinrichtung nach Anspruch 9, **dadurch gekennzeichnet, daß** der Sandwichkörper aus Steinwolle besteht (Fig. 27).

14. Schallschutzeinrichtung nach Anspruch 9 oder 13, **dadurch gekennzeichnet, daß** der Sandwichkörper mit dem Bodenteil (6) verklebt ist (Fig. 27).

15. Schallschutzeinrichtung nach einem der Ansprüche 9, 13 oder 14, **dadurch gekennzeichnet, daß** die den Sandwichkörper abdeckende Noppenfolie (10) auf den Sandwichkörper aufgeklebt ist (Fig. 27).

16. Schallschutzeinrichtung nach Anspruch 9 oder 15, **dadurch gekennzeichnet, daß** die Noppenfolie (10) mit dem Deckelteil (7) verklebt ist (Fig. 27).

17. Schallschutzeinrichtung nach einem der Ansprüche 9 bis 16, **dadurch gekennzeichnet, daß** der Lochanteil im Deckelteil (7) 45 % der Deckelfläche beträgt (Fig. 27).

18. Schallschutzeinrichtung nach einem der Ansprüche 9 bis 17, **dadurch gekennzeichnet, daß** das schallabsorbierende Material (8) recyclebar ist.

19. Schallschutzeinrichtung nach einem der Ansprüche 9 bis 18, **dadurch gekennzeichnet, daß** das schallabsorbierende Material aus zerfasertem Zeitungspapier besteht.

20. Schallschutzeinrichtung nach einem der Ansprüche 9 bis 18, **dadurch gekennzeichnet, daß** das schallabsorbierende Material aus Flachsfasern besteht.

21. Schallschutzeinrichtung nach einem der Ansprüche 9 bis 20, **dadurch gekennzeichnet, daß** das schallabsorbierende Material gegen Witterungseinflüsse resistent gemacht ist, z.B. durch Imprägnieren mit Borsalzen.

22. Schallschutzeinrichtung nach einem der Ansprüche 9 bis 21, **dadurch gekennzeichnet, daß** die Kassetten (5) gekrümmt ausgebildet sind (Fig. 27).

23. Anordnung zur Schalldämmung entlang von Verkehrswegen, eingeschlossen jene des schienengebundenen Verkehrs mit einer Schallschutzeinrichtung nach einem der Ansprüche 1 bis 22, **dadurch gekennzeichnet, daß** die Schallschutzeinrichtung so angeordnet ist, daß der Krümmungsmittelpunkt bzw. daß die Krümmungsmittelpunkte des oberen Wandabschnittes (1) an der von der Lärmquelle (11) abgewandten Seite der Wand liegen.

24. Anordnung nach Anspruch 23, **dadurch gekennzeichnet, daß** der Krümmungsradius des oberen Wandabschnittes bzw. die Krümmungsradien des oberen Wandabschnittes möglichst groß, beispielsweise unendlich sind.

25. Anordnung nach Anspruch 23 oder 24, **dadurch gekennzeichnet, dass** der obere Wandabschnitt ( 1 ), hinsichtlich seiner Neigung gegenüber dem benachbarten Verkehrsweg justierbar ist, und daß der obere Wandabschnitt (1) tangential zu einer Linie justiert ist, die von der der Schallschutzeinrichtung zunächst gelegenen Lärmquelle auf dem Verkehrsweg ausgeht (Fig. 16, 22).

26. Anordnung nach Anspruch 23 oder 24, **dadurch gekennzeichnet, daß** sowohl von einer von der Wand am weitesten entfernten, auf dem Verkehrsweg befindlichen Lärmquelle als auch von einer der Wand am nächsten befindlichen Lärmquelle auf dem Verkehrsweg, an den oberen Wandteil (1) diesen tangierende Linien (t₁, t₂) legbar sind.

## Claims

1. A sound-proofing device in the form of a wall having an upper wall portion (1) inclined differently, in particular curved, relative to the wall portion adjoining it at the bottom, **characterised in that**, at its free end, the upper wall portion (1) consisting of sound-absorbing material or coated therewith takes the form of a bead (2) of sound-absorbing material or is provided with a bead (2) of such material, which bead leads at the front, i.e. on the side facing the noise source, tangentially into the wall portion (1) or continues the latter.

2. A sound-proofing device according to claim 1, **characterised in that**, at the back of the wall portion (1), the bead (2) meets the latter and at the meeting point forms an angle (α) with the tangent (t) to the back of the wall at the meeting point.

3. A sound-proofing device according to claim 1 or claim 2, **characterised in that** the upper wall portion (1) is constructed as a separate component (4) and is adjustable with regard to its inclination relative to the adjacent traffic route.

4. A sound-proofing device according to claim 3, **characterised in that** the upper wall portion (1) in the form of a separate component (4) is connected swivellably with the wall.

5. A sound-proofing device according to one of claims 1 to 4, **characterised in that** the upper wall portion (1) takes the form of a flat surface.

6. A sound-proofing device according to one of claims 1 to 4, **characterised in that** the upper wall portion (1) takes the form of a flat surface over parts of its cross-section.

7. A sound-proofing device according to one of claims 1 to 6, **characterised in that** the wall is formed of articulatedly interlocking profiled strips.

8. A sound-proofing device according to claim 7, **characterised in that** the interlocking profiled strips consist of extruded aluminium.

9. A sound-proofing device according to one of claims 1 to 8, **characterised in that** the wall is composed of a plurality of panels (5), each of which has a bottom part (6) and a perforated top part (7), which enclose a layer of sound-absorbing material (8) which lies on the bottom part (6), wherein bottom part (6) and top part (7) are assembled in the manner of a box and the layer of sound-absorbing material is a component of a sandwich element, which is covered at the top with a nap film (10), which is in contact with the perforated top part (7) (Fig. 27).

10. A sound-proofing device according to claim 9, **characterised in that** the top part (7) consists of expanded metal (Fig. 27).

11. A sound-proofing device according to claim 9 or claim 10, **characterised in that** the bottom part (6) is heavy, consisting for example of dense material (Fig. 27).

12. A sound-proofing device according to claim 11, **characterised in that** the dense material of which the bottom part (6) consists is sheet metal or stainless steel (Fig. 27).

13. A sound-proofing device according to claim 9, **characterised in that** the sandwich element consists of rock wool (Fig. 27).

14. A sound-proofing device according to claim 9 or claim 13, **characterised in that** the sandwich element is adhesively bonded to the bottom part (6) (Fig. 27).

15. A sound-proofing device according to one of claims 9, 13 or 14, **characterised in that** the nap film (10) covering the sandwich element is adhesively bonded to the sandwich element (Fig. 27).

16. A sound-proofing device according to claim 9 or claim 15, **characterised in that** the nap film (10) is adhesively bonded to the top part (7) (Fig. 27).

17. A sound-proofing device according to one of claims 9 to 16, **characterised in that** the proportion of holes in the top part (7) amounts to 45% of the top surface (Fig. 27).

18. A sound-proofing device according to one of claims 9 to 17, **characterised in that** the sound-absorbing material (8) is recyclable.

19. A sound-proofing device according to one of claims 9 to 18, **characterised in that** the sound-absorbing material consists of pulped newspaper.

20. A sound-proofing device according to one of claims 9 to 18, **characterised in that** the sound-absorbing material consists of flax fibres.

21. A sound-proofing device according to one of claims 9 to 20, **characterised in that** the sound-absorbing material is made resistant to the effects of the weather, e.g. by impregnation with boron salts.

22. A sound-proofing device according to one of claims 9 to 21, **characterised in that** the panels (5) are of curved construction (Fig. 27).

23. An arrangement for sound-proofing along traffic routes, including those for rail-borne traffic, comprising a sound-proofing device according to one of claims 1 to 22, **characterised in that** the sound-proofing device is so arranged that the centre of curvature or the centres of curvature of the upper wall portion (1) is/are located on the side of the wall remote from the noise source (11).

24. An arrangement according to claim 23, **characterised in that** the radius of curvature of the upper wall portion or the radii of curvature of the upper wall portion is/are as large as possible, for example infinite.

25. An arrangement according to claim 23 or claim 24, **characterised in that** the upper wall portion (1) is adjustable with regard to its inclination relative to the adjacent traffic route and **in that** the upper wall portion (1) is adjusted tangentially to a line which starts from the noise source closest to the sound-proofing device on the traffic route (Figs. 16, 22).

26. An arrangement according to claim 23 or 24, **characterised in that** lines (t₁, t₂) both from a noise source located on the traffic route but furthest from the wall and from a noise source on the traffic route but located closest to the wall may be applied to the upper wall part (1) at a tangent thereto.

## Revendications

1. Dispositif antibruit se présentant sous la forme d'un mur comprenant une section de mur (1) supérieure qui, par rapport à la section de mur sous-jacente, présente une inclinaison différente et est notamment incurvée, **caractérisé en ce que** la section de mur (1) supérieure, qui est réalisée dans un matériau insonorisant ou en est revêtue, est conformée, à son extrémité libre, en bourrelet (2) en matériau insonorisant, ou est équipée d'un bourrelet (2) constitué dans un tel matériau, qui rejoint tangentiellement la section de mur (1), du côté antérieur, c'est-à-dire du côté qui est orienté vers la source de bruit, et/ou qui prolonge celle-ci.

2. Dispositif antibruit selon la revendication 1, **caractérisé en ce que** le bourrelet (2) présent sur la face arrière de la section de mur (1) rencontre celle-ci et, au point de rencontre, forme un angle (α) avec la tangente (t), sur la face arrière du mur.

3. Dispositif antibruit selon la revendication 1 ou 2, **caractérisé en ce que** la section supérieure de mur (1) est conformée en composant séparé (4) dont l'inclinaison, par rapport à la voie de communication voisine, peut être réglée.

4. Dispositif antibruit selon la revendication 3, **caractérisé en ce que** la section supérieure de mur (1) conformée en composant séparé (4) est reliée au mur de façon pivotante.

5. Dispositif antibruit selon l'une des revendications 1 à 4, **caractérisé en ce que** la section supérieure de mur (1) est conformée en surface plane.

6. Dispositif antibruit selon l'une des revendications 1 à 4, **caractérisé en ce que** la section supérieure de mur (1), dans certaines parties de la section transversale, est conformée en surface plane.

7. Dispositif antibruit selon l'une des revendications 1 à 6, **caractérisé en ce que** le mur est formé de bandes profilées accrochées et articulées les unes avec les autres.

8. Dispositif antibruit selon la revendication 7, **caractérisé en ce que** les bandes profilées accrochées les unes avec les autres sont constituées en aluminium extrudé.

9. Dispositif antibruit selon l'une des revendications 1 à 8, **caractérisé en ce que** le mur est composé de plusieurs caissons (5), dont chacun possède respectivement un fond (6) et un couvercle perforé (7) qui entourent une couche de matériau insonorisant (8) qui repose sur le fond (6), le fond (6) et le couvercle (7) étant assemblés à la façon d'une boîte et la couche en matériau insonorisant faisant partie d'un corps en sandwich qui est recouvert, côté couvercle, par une feuille à bossages (10) qui touche le couvercle perforé (7) (Fig. 27).

10. Dispositif antibruit selon la revendication 9, **caractérisé en ce que** le couvercle (7) est constitué en métal déployé (Fig. 27).

11. Dispositif antibruit selon la revendication 9 ou 10, **caractérisé en ce que** le fond (6) est lourd et est constitué, par exemple, dans un matériau spécifiquement lourd (Fig. 27).

12. Dispositif antibruit selon la revendication 11, **caractérisé en ce que** le matériau spécifiquement lourd qui constitue le couvercle (6) est de la tôle ou de l'inox.

13. Dispositif antibruit selon la revendication 9, **caractérisé en ce que** le corps en sandwich est constitué en laine de roche (Fig. 27).

14. Dispositif antibruit selon la revendication 9 ou 13, **caractérisé en ce que** le corps en sandwich est collé au fond (6) (Fig. 27).

15. Dispositif antibruit selon l'une des revendications 9, 13 ou 14, **caractérisé en ce que** la feuille à bossages (10) qui recouvre le corps en sandwich est collée sur le corps en sandwich (Fig. 27).

16. Dispositif antibruit selon la revendication 9 ou 15, **caractérisé en ce que** la feuille à bossages (10) est collée au couvercle (7) (Fig. 27).

17. Dispositif antibruit selon l'une des revendications 9 à 16, **caractérisé en ce que** la proportion de trous dans le couvercle (7) représente 45 % de la surface du couvercle (Fig. 27).

18. Dispositif antibruit selon l'une des revendications 9 à 17, **caractérisé en ce que** le matériau insonorisant (8) est recyclable.

19. Dispositif antibruit selon l'une des revendications 9 à 18, **caractérisé en ce que** le matériau insonorisant est constitué en papier journal défibré.

20. Dispositif antibruit selon l'une des revendications 9 à 18, **caractérisé en ce que** le matériau insonorisant est constitué de fibres aplaties.

21. Dispositif antibruit selon l'une des revendications 9 à 20, **caractérisé en ce que** le matériau insonorisant est rendu résistant aux intempéries, par exemple en l'imprégnant de sels de bore.

22. Dispositif antibruit selon l'une des revendications 9 à 21, **caractérisé en ce que** les caissons (5) présentent une forme incurvée (Fig. 27).

23. Equipement insonorisant le long de voies de communication, y compris le long de voies pour véhicules sur rails, comprenant un dispositif antibruit selon l'une des revendications 1 à 22, **caractérisé en ce que** le dispositif antibruit est disposé de telle sorte que le centre de courbure et/ou que les centres de courbure de la section supérieure de mur (1) sont situés du côté qui est opposé à la source de bruit (11).

24. Equipement selon la revendication 23, **caractérisé en ce que** le rayon de courbure de la section supérieure de mur et/ou les rayons de courbure de la section supérieure de mur est/sont le plus élevé(s) possible, et sont, par exemple, infinis.

25. Equipement selon la revendication 23 ou 24, **caractérisé en ce que** l'inclinaison de la section supérieure de mur (1), par rapport à la voie de communication voisine, peut être réglée et **en ce que** la section supérieure de mur (1) est ajustée tangentiellement à une ligne qui part de la source de bruit, sur la voie de communication, qui est la plus proche du dispositif antibruit (Fig. 16, 22).

26. Equipement selon la revendication 23 ou 24, **caractérisé en ce que** des tangentes (t₁, t₂) à la section supérieure de mur peuvent être tracées entre la section supérieure de mur (1) et une source de bruit, sur la voie de communication, qui est la plus éloignée du mur, aussi bien qu'entre la section supérieure de mur et une source de bruit, sur la voie de communication, qui est la plus proche du mur.
